# FASCICULE DE BREVET EUROPEEN

(11) **EP 3 272 186 B1**
(45) Date de publication et mention de la délivrance du brevet: **17.10.2018**
(21) Numéro de dépôt: 16713548.2
(22) Date de dépôt: 14.03.2016
(51) Int. Cl.: H05B 6/10, G01N 11/12

(54) **SYSTÈME DE TEST COMPRENANT UN DISPOSITIF DE CHAUFFAGE ET PROCÉDÉ DE MISE EN OEUVRE D'UN SYSTÈME DE TEST**
TESTSYSTEM MIT EINER HEIZVORRICHTUNG SOWIE VERFAHREN ZUR IMPLEMENTIERUNG EINES TESTSYSTEMS
TEST SYSTEM COMPRISING A HEATING DEVICE AND METHOD FOR IMPLEMENTING A TEST SYSTEM

(30) Priorité: 16.03.2015 FR 1552101
(43) Date de publication de la demande: 24.01.2018
(73) Titulaire: Chopin Technologies, 92390 Villeneuve la Garenne (FR)
(72) Inventeur: MÉLÈS, Jean-Pierre, 93700 Drancy (FR)
(74) Mandataire: Derambure Conseil
(86) Numéro de dépôt international: PCT/FR2016/050563
(87) Numéro de publication internationale: WO 2016/146928

(56) Documents cités:
- EP-A1- 2 709 079
- WO-A1-99/02965
- WO-A2-2007/124008
- DE-A1- 1 598 437
- FR-A1- 2 726 963
- US-A- 5 201 797

## Description

L'invention concerne le domaine technique des systèmes de test adaptés pour réaliser des tests portant sur un contenu. Le système de test comporte un dispositif de chauffage du contenu comprenant un mélange d'un premier et d'un deuxième produit. En particulier l'invention concerne le domaine technique des systèmes de test comprenant un dispositif de chauffage d'un contenu en vue de faire un test portant sur le contenu, et des procédés de mise en oeuvre de tels systèmes de test. Par exemple, le premier produit est, avant le mélange, un matériau à l'état pulvérulent et le deuxième produit est un produit liquide. Le mélange est ainsi une suspension ou une solution du premier produit qui peut, par exemple être de la farine, et du deuxième produit qui peut, par exemple, être une solution aqueuse.

Les tests portant sur des échantillons comportant au moins une étape de chauffage sont répandus et dans de nombreux domaines d'application. Par exemple, pour mesurer et déterminer la propriété d'une farine, afin d'effectuer sa classification, il est répandu de faire un test appelé le « test d'Hagberg » qui consiste notamment à faire des tests sur un contenu mélangé composé de farine et de liquide. Pour réaliser ce test, une étape de chauffage est nécessaire. Les documents WO9902965 et DE1598437 présentent notamment des mises en oeuvre de ce test ou de tests approchants. Dans la pratique, le « test d'Hagberg » est encore aujourd'hui utilisé en disposant le contenu dans un récipient de test, rigide, et en plaçant le récipient de test dans un bain marie afin d'effectuer le chauffage du contenu. Le principe du bain marie consomme de l'eau. Il est également parfois difficile de maitriser la température du contenu avec l'utilisation du bain marie. Ce principe a également une forte inertie à la montée en température et au refroidissement. La température du bain marie dépendant de l'altitude à laquelle le test est effectué, il est parfois nécessaire de corriger les valeurs obtenues par le test. En outre, les manipulateurs utilisant le bain marie pour faire le test doivent prendre des précautions de sécurité importantes, notamment pour éviter les risques de brûlures. Enfin, l'utilisation du bain marie engendre un encombrement important du dispositif de test.

Il est connu de l'art antérieur, dans d'autres domaines d'application que celui des tests sur les propriétés de farine, différentes solutions visant à réaliser un système de test comprenant un dispositif de chauffage notamment adapté pour réaliser des tests sur un contenu.

Le document US2930098A divulgue un récipient de test en quartz en deux parties reçu dans un récipient extérieur en quartz. Autour du tube extérieur en quartz un mécanisme avec une vis sans fin guide un charriot mobile en translation supportant un bobinage s'étendant en partie autour du tube extérieur en quartz et permettant de chauffer l'intérieur du tube en quartz, notamment par induction. Ce type de système présente un encombrement important et ne permet pas de réaliser de façon simple un chauffage homogène du contenu du récipient de test en évitant des pics de températures à certain endroit.

Le document US3435170A vise à proposer une solution pour chauffer rapidement le contenu d'une pluralité de récipients de test. Le banc d'essai divulgué dans ce document comporte des moyens pour créer un champ magnétique adapté pour traverser le banc d'essai de sorte à induire un courant électrique à l'intérieur de celui-ci et de chauffer régulièrement l'ensemble des récipients de test. Le système décrit, outre son encombrement, car prévu pour tester plusieurs récipients à la fois, permet un chauffage égal de l'ensemble des récipients de test, mais n'assure pas un chauffage homogène de l'ensemble du contenu d'un récipient de test.

Le document EP0439900A2 concerne un four pour le chauffage par induction comprenant un creuset réfractaire et une enveloppe métallique continue. Sur l'enveloppe peuvent être installées des pattes qui assurent une translation de la cuve du four en dehors ou à l'intérieur de la bobine d'induction. Le système décrit dans le document EP0439900A2 ne permet d'accéder facilement au contenu chauffé. En outre, la translation de la cuve du four implique la mise en oeuvre d'un dispositif de déplacement encombrant et des précautions particulières de manipulation du four.

Ainsi, les systèmes décrits dans les documents US2930098A, US3435170A et EP0439900A2 semblent permettre un chauffage pour lequel il est possible de maitriser, au moins partiellement, la température d'un contenu à chauffer, mais tous présentent de nombreux inconvénients, et notamment un encombrement élevé, une mise en oeuvre du dispositif compliquée, des précautions d'utilisation importantes pour éviter les accidents et/ou sont peu adaptables pour chauffer un contenu en vue de faire un test. Le document WO 99/02965 décrit le préambule de la revendication 1.

Il existe par conséquent le besoin de créer un système de test comprenant un dispositif de chauffage qui soit simple à mettre en oeuvre et à manipuler, sans risque pour la sécurité du manipulateur et qui permette un encombrement minimum et un chauffage homogène du contenu d'un récipient pour réaliser un test sur ledit contenu.

A cette fin, le système de test selon l'invention est un système de test adapté pour réaliser des tests portant sur un contenu comprenant un dispositif de chauffage d'un contenu comprenant un mélange d'un premier et d'un deuxième produit, ledit dispositif comportant :
- un récipient de test adapté pour recevoir le contenu, le récipient de test comporte un corps creux rigide définissant un espace intérieur et s'étendant longitudinalement selon un axe de récipient entre une première extrémité et une seconde extrémité, la seconde extrémité étant fermée, le récipient de test comprenant une surface intérieure délimitant l'espace intérieur et une surface extérieure opposée à la surface intérieure,
- un récipient d'accueil adapté pour recevoir le récipient de test, le récipient d'accueil comprenant une surface intérieure orientée vers la surface extérieure du récipient de test et une surface extérieure opposée à la surface intérieure,
- une bobine comprenant des spires d'induction, et
- une source de courant adaptée pour alimenter en courant les spires d'induction,
le système de test étant caractérisé en ce que les spires d'induction sont fixées sur le récipient d'accueil et s'étendent en spirale concentriquement autour du récipient d'accueil, et en ce que ledit système de test comprend un palpeur pour effectuer le mélange du contenu du récipient de test et un mécanisme de guidage du palpeur dans l'espace intérieur du récipient de test selon l'axe de récipient, dans un premier sens et dans un deuxième sens opposé au premier sens.

Grâce à ces dispositions, on réalise un chauffage homogène du contenu du récipient de test ce qui permet d'effectuer un test de qualité. Les pics de température sont évités, tout comme un éventuel croutage du contenu du récipient de test à proximité des parois du récipient de test. Le chauffage par induction permet de maitriser la température du contenu et la cinétique de chauffe du contenu. La présence du récipient d'accueil permet de mettre en position les spires d'induction, et plusieurs tests peuvent être réalisés successivement sans temps de latence important entre deux tests. Le palpeur et le mécanisme de guidage du palpeur permettent d'effectuer le mélange du contenu du récipient de façon autonome, sans nécessiter d'intervention extérieure. Enfin, le système de test ainsi réalisé a un encombrement réduit. Le chauffage par induction présente ainsi de nombreux avantages vis-à-vis notamment d'autres modes de chauffage qui auraient également pu être (et ont été) envisagés par la demanderesse comme, par exemple, le chauffage par résistance chauffante, le chauffage par rayonnement infrarouge, le chauffage dans un four, ou encore le chauffage par micro-ondes. En effet, le chauffage d'un récipient de test à l'aide d'une résistance chauffante s'avère particulièrement long et ne permet pas de maitriser totalement la température du contenu. Le chauffage d'un récipient de test contenant un contenu comprenant un mélange d'un premier et un deuxième produit dans un four pose le problème de la réalisation d'une enceinte qui entraine un encombrement important et une surveillance de nombreux paramètres de l'enceinte lourde à mettre en oeuvre, contrairement au chauffage par induction. Enfin, un chauffage par micro-ondes ne permet pas d'obtenir un chauffage satisfaisant du contenu comprenant un matériau à l'état pulvérulent et un produit liquide dans le but de réaliser des tests, notamment des tests d'Hagberg contrairement, ici encore, au chauffage par induction.

Selon une réalisation, le dispositif de chauffage comprend en outre un récipient intermédiaire agencé entre le récipient d'accueil et le récipient de test, le récipient intermédiaire étant adapté pour recevoir le récipient de test et étant adapté pour être reçu dans le récipient d'accueil, le récipient intermédiaire comprenant une surface intérieure orientée vers la surface extérieure du récipient de test et une surface extérieure opposée à la surface intérieure et orientée vers la surface intérieure du récipient d'accueil.

Selon une réalisation, le récipient intermédiaire est réalisé dans un matériau magnétique ou comporte un matériau magnétique. Par exemple, le récipient intermédiaire est réalisé en fer doux ou en acier doux.

Selon une réalisation, le récipient intermédiaire est fixé dans le récipient d'accueil.

Selon une réalisation, le récipient intermédiaire et le récipient d'accueil sont confondus.

Selon une réalisation, le récipient de test est mobile par rapport au récipient intermédiaire.

Selon une réalisation, le récipient d'accueil comporte une pluralité de bossages disposés sur la face intérieure du récipient d'accueil, la pluralité de bossages étant adaptée pour centrer et fixer le récipient intermédiaire dans le récipient d'accueil.

Selon une réalisation, le récipient de test présente une poignée isolante.

Selon une réalisation, la poignée isolante est agencée à proximité de la première extrémité du récipient de test. La poignée permet ainsi une préhension aisée du récipient de test par un opérateur, notamment après la réalisation du test sur le contenu et le chauffage du contenu du récipient de test.

Selon une réalisation, la première extrémité du récipient de test définit une ouverture d'emplissage.

Selon une réalisation, la seconde extrémité du récipient de test comporte une ouverture de vidange fermée par un bouchon. La présence du bouchon permet une ouverture du récipient de test sur deux côtés de sorte à notamment faciliter le nettoyage dudit récipient. Par exemple, la seconde extrémité comporte un filetage et le bouchon est vissé sur la seconde extrémité. Un joint d'étanchéité peut être prévu pour garantir l'étanchéité du récipient de test au voisinage de sa seconde extrémité.

Selon une réalisation, le récipient d'accueil comprend une rainure hélicoïdale, continue. La rainure hélicoïdale s'étend sur la surface extérieure du récipient d'accueil.

Selon une réalisation, les spires d'induction de la bobine sont logées dans la rainure. La rainure permet ainsi le guidage et le maintien des spires d'induction en position sur le récipient d'accueil. Les spires d'induction sont ainsi fixées sur la surface extérieure du récipient d'accueil de sorte à l'entourer. La rainure empêche tout déplacement des spires d'induction.

Selon une réalisation, le récipient d'accueil comporte une base et la seconde extrémité du récipient de test ou une extrémité du récipient intermédiaire est adaptée pour reposer sur la base.

Selon une réalisation, les bossages assurent le maintien du récipient intermédiaire dans le récipient d'accueil.

Selon une réalisation, le récipient de test comporte un matériau à faible coefficient de frottement, comme par exemple le verre, l'aluminium, etc.... Par exemple, le récipient de test est entièrement réalisé en aluminium. Un tel matériau assure une longévité du récipient de test et évite tout risque d'interaction chimique avec le contenu du récipient de test en permettant un chauffage correct du contenu.

Selon une réalisation, le récipient d'accueil est réalisé par frittage, notamment par frittage de poudre. Par exemple le récipient d'accueil est réalisé par une imprimante trois dimensions. En l'espèce, le récipient d'accueil peut être réalisé par impression trois dimensions par frittage de poudre. En outre, la rainure le cas échéant peut être directement réalisée lors de l'impression du récipient d'accueil et n'a pas à être usinée par la suite lors d'une seconde étape. Ce récipient d'accueil peut être associé à une deuxième enveloppe qui assure dans ce cas le rôle de récipient d'accueil.

Selon une réalisation, le palpeur s'étend longitudinalement selon un axe de palpeur entre une première extrémité et une seconde extrémité, la première extrémité étant adaptée pour être agencée dans l'espace intérieur du récipient de test, la seconde extrémité étant destinée à être maintenue à l'extérieur de l'espace intérieur du récipient de test.

Selon une réalisation, le mécanisme de guidage est agencé en regard de l'ouverture d'emplissage et comporte un dispositif de retenue, largable, du palpeur. Le dispositif de retenue est largable, il peut donc dans un premier mode retenir le palpeur et dans un deuxième mode se désolidariser du palpeur.

Selon une réalisation complémentaire, le système de retenu comporte un électroaimant et le palpeur comporte un élément magnétique. Ainsi par exemple, l'électroaimant, lorsqu'il est alimenté permet la retenue du palpeur sur le mécanisme de guidage et lorsqu'il n'est plus alimenté, le palpeur est indépendant (ou désolidarisé) du mécanisme de guidage. L'électroaimant assure notamment une précision d'actionnement, limite les jeux et évite d'éventuels chocs lors du guidage du palpeur, notamment lors de changement de directions. Le système de retenu peut alternativement ou de façon complémentaire à l'électroaimant comporter une ventouse.

Selon une réalisation, complémentaire, l'élément magnétique (ou un aimant) est fixé sur la seconde extrémité du palpeur.

Selon une réalisation, le système de test comprend en outre un capteur de force adapté pour mesurer une force de poussée, de pénétration ou de retenue du palpeur.

Selon une réalisation, l'électroaimant est fixé sur le capteur de force.

Selon une réalisation, le système de test comprend en outre :
- un boitier intérieur, dans lequel sont agencés le récipient d'accueil, le récipient de test et éventuellement le récipient intermédiaire,
- un boitier extérieur, le boitier intérieur étant logé dans le boitier extérieur, et
- un matériau isolant, agencé entre le boitier extérieur et le boitier intérieur.

Avec ces dispositions, le dispositif de chauffage peut être utilisé en toute sécurité sans risque de brulure par un utilisateur, le matériau isolant permettant notamment d'isoler le boitier extérieur servant de carter extérieur au dispositif de chauffage. Le récipient de test est mobile et peut être inséré et ôté du récipient d'accueil ou du récipient intermédiaire.

Selon une réalisation, le système de test comprend en outre un châssis sur lequel est fixé le mécanisme de guidage, le boitier extérieur étant fixé mobile en pivotement autour d'un axe de basculement au châssis. Cette disposition permet une mise en place et un retrait aisé du récipient de test dans le récipient intermédiaire ou récipient d'accueil.

Selon une réalisation, le système de test comprend en outre un dispositif de ventilation adapté pour refroidir le récipient de test. Par exemple le dispositif de ventilation comprend une ou plusieurs colonnes de ventilation. Le dispositif de ventilation peut comprendre, alternativement ou en complément, une turbine adaptée pour refroidir le récipient de test. Eventuellement, la turbine est associée à des éléments Peltier.

Selon une réalisation, le boitier intérieur comporte un matériau isolant, par exemple du polychlorure de vinyle.

Selon une réalisation, le système de test comprend un capteur de température adapté pour mesurer la température du contenu du récipient de test.

Selon une réalisation, le capteur de température est un capteur de type thermocouple ou équivalent adapté pour venir en contact avec la surface extérieure du récipient d'accueil, du récipient intermédiaire et/ou du récipient de test.

Selon une réalisation alternative, le capteur de température comporte un capteur infrarouge, par exemple sans contact mesurant la température de surface du récipient de test. Selon une réalisation, le capteur de température mesure la température de la surface intérieure du récipient intermédiaire.

Selon un autre aspect, l'invention peut également avoir pour objet un procédé de mise en oeuvre d'un système de test tel que décrit comprenant les étapes :
- alimenter les spires d'induction de sorte à créer des courants induits et de sorte à chauffer par induction l'espace intérieur défini par le récipient intermédiaire
- emplir le récipient de test d'un contenu comprenant un premier et un deuxième produit, par exemple un matériau à l'état pulvérulent et un produit liquide,
- placer le récipient de test à l'intérieur du récipient intermédiaire,
- mélanger le contenu du récipient de test avec le palpeur relié au mécanisme de guidage par déplacement du palpeur selon la direction de l'axe de récipient dans le premier sens et dans le deuxième sens,
- alimenter les spires d'induction de sorte à créer des courants induits et de sorte à chauffer par induction le contenu du récipient de test et/ou l'espace intérieur défini par le récipient intermédiaire.

Selon une réalisation complémentaire, le procédé comprend en outre les étapes :
- larguer le palpeur du dispositif de retenue de sorte que le palpeur chute dans le récipient de test,
- mesurer le temps de chute du palpeur dans le récipient de test.

Selon une réalisation complémentaire, le procédé comprend en outre les étapes :
- prévoir un capteur de température,
- contrôler la température de la surface extérieure du récipient de test, et donc du contenu.

Selon une réalisation complémentaire et/ou alternative, le procédé comprend en outre les étapes :
- prévoir un capteur de force,
- mesurer l'effort exercé par le palpeur pendant le mélange du contenu du récipient de test avec le palpeur et/ou après son largage par le dispositif de retenue et/ou
- mesurer l'effort de poussée de pénétration et/ou de retenue exercé par le palpeur.

Ainsi le procédé décrit et/ou le dispositif de chauffage décrit permet de réaliser notamment le test d'Hagberg décrit ci-avant avec la détermination de l'activité enzymatique, mais également d'autres tests de détermination des propriétés d'une farine comme par exemple des propriétés rhéologiques ou encore des tests de détermination des propriétés de l'amidon de la farine. Le dispositif décrit permet également de combiner plusieurs tests, ce qui n'était jusqu'ici pas possible dans les dispositifs conventionnellement utilisés.

On décrit maintenant brièvement les figures des dessins.
La figure 1 est une vue isométrique d'une première variante de réalisation d'un dispositif de chauffage d'un système de test selon l'invention, le dispositif de chauffage comportant notamment un récipient de test et un récipient d'accueil, sur lequel est prévue une bobine avec des spires d'induction.
La figure 2 est une vue isométrique d'une deuxième variante de réalisation d'un dispositif de chauffage d'un système de test selon l'invention, le dispositif de chauffage comportant notamment un récipient de test, un récipient intermédiaire et un récipient d'accueil, sur lequel est prévue une bobine avec des spires d'induction.
La figure 3 est une vue de dessus des récipients intermédiaire et d'accueil de la figure 2.
La figure 4 est une vue isométrique d'un récipient de test comprenant une première et une seconde extrémité, la seconde extrémité étant munie d'un bouchon.
La figure 5 est une vue isométrique d'un récipient de test selon une variante de réalisation comprenant une première et une seconde extrémité, la seconde extrémité étant munie d'un bouchon et la première extrémité étant munie d'une poignée, notamment d'une poignée isolante.
La figure 6 représente une vue de dessus du récipient intermédiaire et du récipient d'accueil dans un boitier intérieur, lui-même inséré dans un boitier extérieur.
La figure 7 représente la vue de dessus du récipient intermédiaire et du récipient d'accueil dans un boitier intérieur, lui-même inséré dans un boitier extérieur de la figure 6 avec, inséré dans le récipient intermédiaire, le récipient de test.
La figure 8 représente une vue isométrique du boitier extérieur du système de test.
La figure 9 représente une vue de côté du système de test selon l'invention selon un premier agencement avec un châssis et des moyens de contrôle et de mesure et dans lequel le boitier extérieur de la figure 7 est basculé par rapport au châssis de sorte à permettre le retrait ou l'insertion du récipient de test avant ou après un test sur le contenu du récipient de test.
La figure 10 représente une vue avant du système de test de la figure 9.
La figure 11 représente schématiquement une vue isométrique d'un système de test selon l'invention, avec le boitier extérieur dans lequel sont agencés le récipient de test, le récipient intermédiaire et le récipient d'accueil et des moyens de contrôle et de mesure, et dans lequel le boitier extérieur est agencé de sorte à permettre la réalisation d'un test sur le contenu du récipient de test,

Ci-après un exposé détaillé de plusieurs modes de réalisation de l'invention assortis d'exemples et de références aux dessins.

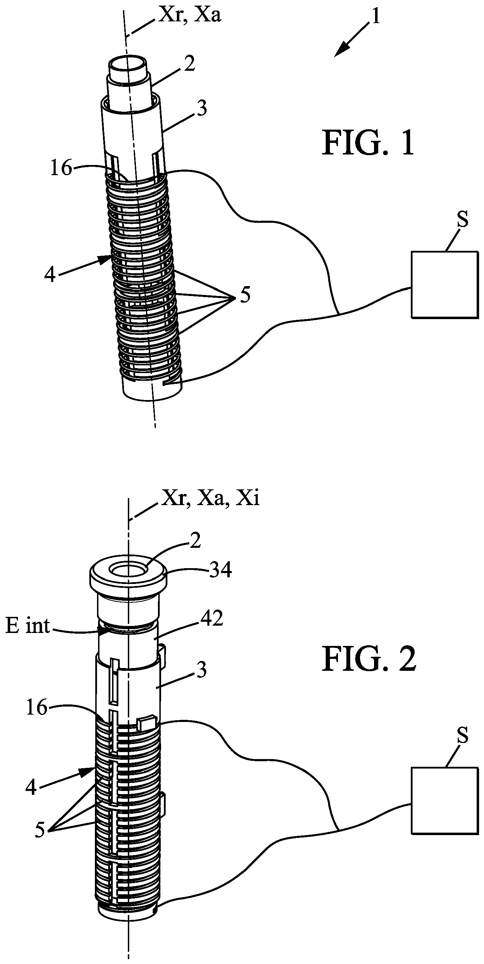

La figure 1 illustre un dispositif de chauffage 1 d'un système de test 17. Le dispositif de chauffage 1 est un dispositif de chauffage d'un contenu, notamment d'un contenu comprenant un mélange d'un premier et un deuxième produit. Avant mélange, le premier produit peut être un matériau à l'état pulvérulent et le deuxième produit un produit liquide. Le dispositif de chauffage 1 comporte notamment, comme visible sur la figure 1 un récipient de test 2, un récipient d'accueil 3, une bobine 4 comprenant des spires d'induction 5 et une source de courant S adaptée pour alimenter les spires d'induction 5. Le récipient de test 2 est destiné à recevoir le contenu, en vue notamment de faire un test portant sur le contenu chauffé.

De préférence, et comme illustré sur la figure 2, le dispositif de chauffage 1 comporte en outre un récipient intermédiaire 42 agencé entre le récipient de test 2 et le récipient d'accueil 3.

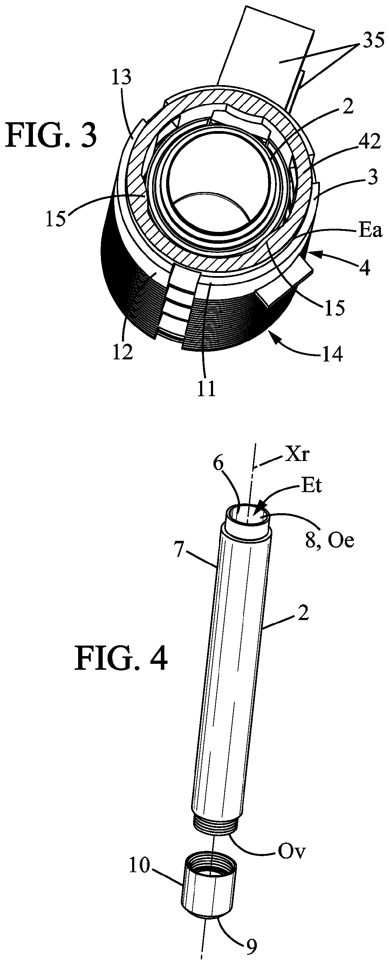

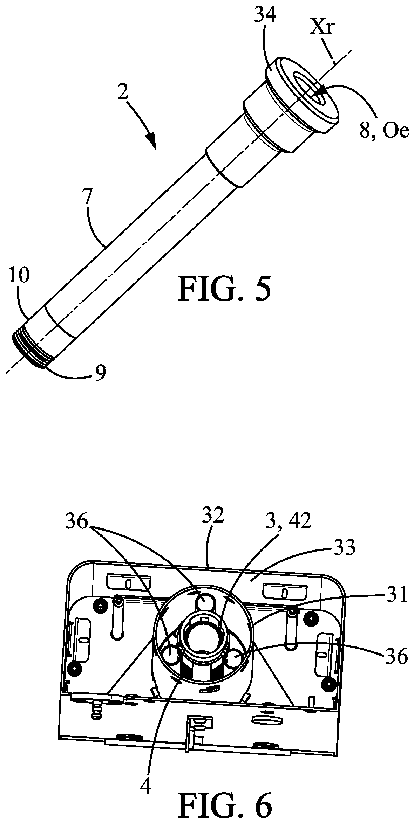

Tel que représenté sur les figure 1, 2 ou plus en détail sur les figures 4 et 5, le récipient de test 2 comporte une forme cylindrique. Le récipient de test 2 est par exemple un récipient de type tube à essai et comporte un corps creux rigide définissant un espace intérieur Et s'étendant longitudinalement selon un axe de récipient Xr. Le récipient de test 2 comporte une surface intérieure 6, la surface intérieure 6 délimite l'espace intérieur Et. Le récipient de test 2 comporte également une surface extérieure 7, opposée à la surface intérieure 6. Le récipient de test 2 peut avoir une contenance inférieure à un litre. Le récipient de test 2 peut avoir la forme et la contenance d'un tube à essai.

Comme visible sur les figures 4 et 5, le récipient de test 2 s'étend selon l'axe de récipient Xr entre une première et une seconde extrémité 8, 9. Par exemple, la première extrémité 8 du récipient de test 2 définit une ouverture d'emplissage Oe. Notamment, l'espace intérieur Et du récipient de test 2 peut recevoir un contenu par l'ouverture d'emplissage Oe. La seconde extrémité 9 du récipient de test 2 peut également définir une ouverture Ov, par exemple une ouverture de vidange Ov. L'ouverture de vidange Ov peut être fermée par un bouchon 10. Par exemple la seconde extrémité 9 du récipient de test 2 comporte un filetage et le bouchon 10 est vissé sur le filetage. Une telle ouverture de vidange Ov et un tel bouchon 10 permettent en particulier d'assurer un nettoyage performant du récipient de test 2. Un joint d'étanchéité (non représenté) peut être prévu entre le bouchon 10 et le corps creux du récipient de test 2 de sorte à garantir une étanchéité du récipient de test 2, notamment lors de son emplissage par un contenu. Toutefois, dans une variante de réalisation, le récipient de test 2 peut avoir une seconde extrémité 9 fermée sans bouchon 10 amovible.

Dans la variante de réalisation représentée notamment sur la figure 2, le récipient de test 2 est réalisé dans un matériau permettant un bon transfert thermique. En outre, le matériau du récipient de test présente un faible coefficient de frottement. Le récipient de test 2 est en outre réalisé dans un matériau léger. Par exemple, le récipient de test 2 est réalisé en aluminium. Toutefois, d'autres matériaux, présentant notamment un bon coefficient de transfert thermique, peuvent être envisagés. Le bouchon 10 est par exemple réalisé dans un matériau semblable au matériau du corps creux rigide. Dans la variante de réalisation de la figure 1 (c'est-à-dire dans la variante de réalisation dépourvue de récipient intermédiaire), le récipient de test est de préférence en matériau magnétique.

Le récipient de test 2 est destiné à être logé dans le récipient d'accueil 3. Le récipient de test peut être logé directement dans le récipient d'accueil 3, comme visible sur la figure 1 ou, selon une variante préférée de l'invention, illustrée notamment sur la figure 2, peut être logé dans le récipient intermédiaire 42 qui lui-même est logé dans le récipient d'accueil 3.

Par exemple, comme visible sur les figures 2 et 3, le récipient intermédiaire 42 est agencé entre le récipient d'accueil 3 et le récipient de test 2. Le récipient intermédiaire 42 est adapté pour recevoir le récipient de test 2 et pour être reçu dans le récipient d'accueil 3. Le récipient intermédiaire 42 présente une surface intérieure orientée vers la surface extérieure du récipient de test 2 et une surface extérieure opposée à la surface intérieure. Le récipient intermédiaire 42 peut être de forme cylindrique. Le récipient intermédiaire 42 définit un espace intérieur Eint et le récipient de test est destiné à être positionné dans l'espace intérieur du récipient intermédiaire 42. Notamment, le récipient intermédiaire présente un diamètre intérieur supérieur au diamètre extérieur du récipient de test 2. En outre, le récipient intermédiaire 42 a une longueur sensiblement égale à celle du récipient de test 2. Le récipient intermédiaire 42 s'étend longitudinalement selon un axe intermédiaire Xi entre une première extrémité et une seconde extrémité. La première extrémité délimite une ouverture à travers laquelle le récipient de test 2 peut être inséré et/ou retiré, par exemple avant et/ou après la conduction d'un test avec le système de test 17. La base du récipient intermédiaire 42 permet un blocage du récipient de test 2 selon l'axe intermédiaire Xi.

Le récipient intermédiaire 42 comporte ou est réalisé dans un matériau magnétique. En l'espèce, le récipient intermédiaire 42 comporte un matériau présentant de bonnes caractéristiques magnétiques. Le matériau présente également un bon coefficient de transfert thermique ainsi qu'une bonne résistance et une forte perméabilité magnétique. Par exemple le récipient intermédiaire 42 comporte ou est réalisé dans un matériau tel que le fer doux ou l'acier doux.

Le récipient intermédiaire peut être inséré par force dans le récipient d'accueil 3 et peut être monté fixe par rapport au récipient d'accueil 3.

Le récipient d'accueil 3 est, comme représenté sur les figures 1, 2, 3, de forme cylindrique.

Le récipient d'accueil 3 comporte un corps creux définissant un espace intérieur Ea (visible sur la figure 3) dans lequel est destiné à être logé le récipient intermédiaire 42 (comme visible sur la figure 2) ou le récipient de test 2 (comme visible sur la figure 1).

Par exemple, le récipient d'accueil 3 comporte une base et la seconde extrémité 9 du récipient de test 2 ou le récipient intermédiaire 42 est adaptée pour être en regard de la base. Le récipient d'accueil 3 comporte une surface intérieure 11 qui délimite son espace intérieur Ea et une surface extérieure 12, opposée à la surface intérieure. La surface intérieure 11 du récipient d'accueil 3 est en regard de la surface extérieure du récipient intermédiaire 42. Notamment, le récipient d'accueil 3 peut présenter un diamètre intérieur supérieur au diamètre extérieur du récipient intermédiaire 42. En outre, le récipient d'accueil 3 a une longueur sensiblement égale à celle du récipient de test 2 et du récipient intermédiaire 42. Le récipient d'accueil 3 s'étend longitudinalement selon un axe d'accueil Xa entre une première extrémité 13 et une seconde extrémité 14. La première extrémité 13 délimite une ouverture à travers laquelle le récipient intermédiaire 42 est inséré par exemple. En l'espèce, le récipient intermédiaire est fixé sur le récipient d'accueil 3 de sorte que le récipient intermédiaire ne puisse pas être mobile par rapport au récipient d'accueil.

Le récipient d'accueil 3, et plus spécifiquement la face intérieure 11 du récipient d'accueil 3 peut comprendre un dispositif de centrage 15 du récipient intermédiaire 42. Par exemple, une série de bossages 15 peut être prévue sur la face intérieure du récipient d'accueil 3. Les bossages 15 peuvent s'étendre sur toute la longueur du récipient d'accueil 3 et/ou sur une partie du récipient d'accueil 3. Par exemple, trois bossages peuvent être prévus équirépartis sur la circonférence de la surface intérieure 11 du récipient d'accueil 3. Les bossages 15 permettent notamment de fixer et centrer le récipient intermédiaire 42 dans le récipient d'accueil 3. La pluralité de bossages peut également permettre une éventuelle circulation d'air autour du récipient intermédiaire. Dans une variante de réalisation, le récipient intermédiaire 42 peut comprendre également un dispositif de centrage du récipient de test. Par exemple, une série de bossages peuvent être répartis sur la circonférence de la surface intérieure du récipient intermédiaire 42.

La bobine 4 comprenant des spires d'induction 5 est fixée sur le récipient d'accueil 3. Plus particulièrement, la bobine 4 s'étend en spirale concentriquement autour de récipient d'accueil 3. Par exemple, la bobine 4 est fixée sur la surface extérieure 12 du récipient d'accueil 3. Dans une variante de réalisation, la bobine peut être directement fixée sur le récipient intermédiaire 42. Dans cette variante de réalisation, le récipient intermédiaire et le récipient d'accueil ne forme qu'un seul et même récipient.

Le récipient d'accueil 3 peut être réalisé par frittage, notamment par frittage de poudre. En l'espèce, le récipient d'accueil 3 peut être réalisé à l'aide d'une imprimante trois dimensions. Par exemple, le récipient d'accueil 3 peut être réalisé par impression trois dimensions par frittage de poudre. Lors de la réalisation du récipient d'accueil 3, il est possible de prévoir sur la face extérieure 12 du récipient d'accueil 3 une rainure 16 hélicoïdale. La rainure 16 hélicoïdale peut être directement réalisée lors de la fabrication du récipient d'accueil 3 par l'imprimante trois dimensions et au sein d'une même étape de fabrication. Toutefois dans une variante de réalisation, la rainure 16 peut être réalisée par usinage de la surface extérieure 12 du récipient d'accueil 3.

En l'espèce, la rainure 16 hélicoïdale est adaptée pour recevoir les spires de la bobine 4. Plus précisément, les spires de la bobine 4 sont fixées dans la rainure 16 hélicoïdale. Ainsi, les spires d'induction 5 de la bobine 4 sont immobiles par rapport au récipient d'accueil 3.

La rainure 16 peut avoir des dimensions sensiblement égales, même légèrement plus grandes que celles des spires d'induction 5 de la bobine 4. La rainure 16 et/ou les spires d'induction 5 de la bobine 4 peuvent s'étendre de façon hélicoïdale sur toute la longueur du récipient d'accueil 3 ou sur une portion supérieure ou égale à 50 % de la longueur du récipient d'accueil 3, par exemple sur une portion supérieure ou égale à 70 % de la longueur du récipient d'accueil 3.

Les spires d'induction 5 de la bobine 4 peuvent être régulièrement réparties sur la surface extérieure 12 du récipient d'accueil 3. Par exemple, la bobine 4 comporte vingt-six spires d'induction 5 également réparties de façon hélicoïdale sur la surface extérieure du récipient d'accueil 3. Dans des variantes de réalisation, la bobine 4 peut comporter plus ou moins de vingt-six spires d'induction. Les spires d'induction 5 peuvent être centrées le long de l'axe d'accueil Xa, de sorte que les première et seconde extrémités 13, 14 du récipient d'accueil 3 sont dépourvues de spires d'induction 5. L'écartement entre les spires de la bobine 4 peut être régulier ou au contraire dépendre de la position de la spire selon l'axe d'accueil Xa.

En l'espèce la bobine 4 est réalisée en fil de Litz. Le fil de Litz permet notamment un meilleur rendement que les fils de cuivre. Toutefois, dans une variante de réalisation, la bobine 4 peut être réalisée en fil de cuivre et les pertes cuivre peuvent être utilisées dans le dispositif de chauffage 1.

La source de courant S permet d'alimenter la bobine 4 et donc les spires d'induction 5 de sorte à permettre un chauffage par induction. En l'espèce, lorsque le récipient de test 2 ou le récipient intermédiaire 42 est logé dans le récipient d'accueil 3, le récipient intermédiaire 42 (ou le récipient de test 2 selon la variante représentée sur la figure 1) va baigner dans un champ électromagnétique créé par les spires d'induction 5 et le matériau ayant une forte perméabilité magnétique du récipient intermédiaire 42. Des courants de Foucault vont alors être générés et l'énergie va se dissiper dans le récipient intermédiaire sous forme de chaleur. Ainsi, on assure le chauffage du récipient intermédiaire et de l'espace intérieur Eint du récipient intermédiaire par induction. Lorsque le récipient de test 2 est agencé à l'intérieur de l'espace intérieur Eint du récipient intermédiaire 42, ce récipient de test 2 est chauffé, ainsi que son contenu.

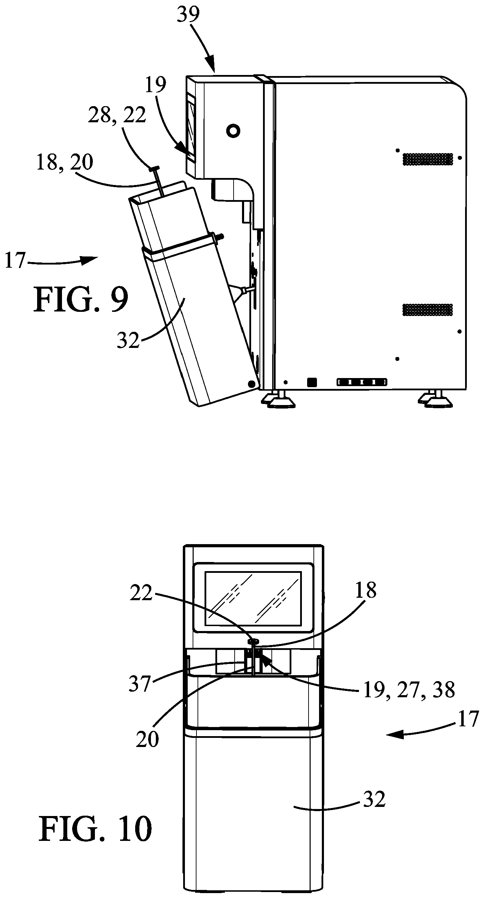

Le dispositif de chauffage 1 ainsi décrit peut être intégré dans le système de test 17 adapté pour réaliser des tests portant sur un contenu, comme illustré notamment sur les figures 9 à 11.

Le système de test 17 comporte en outre un palpeur 18 et un mécanisme de guidage 19 du palpeur 18.

Le palpeur 18 est adapté pour effectuer le mélange du contenu du récipient de test 2. Par exemple le palpeur 18 comporte une tige s'étendant longitudinalement selon un axe de palpeur 18 entre une première et une seconde extrémité 21, 22.

Par exemple, la première extrémité est adaptée pour être introduite dans l'espace intérieur Et du récipient de test 2, notamment pour mélanger et/ou homogénéiser le contenu du récipient de test 2. Lorsque le palpeur 18, ou au moins la première extrémité 21 du palpeur 18 est introduit(e) dans le récipient de test 2, l'axe de palpeur 18 est sensiblement aligné avec l'axe de récipient Xr.

La seconde extrémité 22 du palpeur 18 est en l'espèce adaptée pour être agencée à l'extérieur du récipient de test 2.

La première extrémité 21 peut comporter un organe de mélange 23 de forme sensiblement circulaire s'étendant selon un plan ayant pour normale l'axe de palpeur A. La première extrémité 21 du palpeur 18 devant être introduite dans le récipient de test 2, l'organe de mélange 23 a par conséquent des dimensions sensiblement égales ou plus petites que celles du corps creux du récipient de test 2.

En particulier, l'organe de mélange 23 peut avoir un diamètre égal ou légèrement inférieur au diamètre intérieur du récipient de test 2. L'organe de mélange 23 peut être pourvu d'ouvertures pour permettre le mélange du contenu du récipient de test 2. Par exemple, l'organe de mélange 23 comporte une couronne extérieure 24 sensiblement circulaire qui est reliée à la tige par trois pattes d'attache équiréparties autour de la tige 20.

Le palpeur 18 est entraîné par le mécanisme de guidage 19. Le mécanisme de guidage 19 guide le palpeur 18, et plus particulièrement la première extrémité du palpeur 18 dans l'espace intérieur du récipient de test 2 selon l'axe de récipient Xr, dans un premier sens X1 et dans un deuxième sens X2, opposé au premier sens X1. En l'espèce le mécanisme de guidage 19 guide en translation le palpeur 18 de sorte que celui-ci et plus particulièrement l'organe de mélange 23 puisse faire des allers-retours dans l'espace intérieur du récipient et ainsi puisse mélanger le contenu du récipient de test 2. Dans des variantes de réalisation, d'autres types de cinématiques de guidage pourraient être mises en oeuvre, comme par exemple un guidage en rotation pour effectuer le mélange du contenu du récipient de test 2.

Le mécanisme de guidage 19 peut être un actionneur électrique avec une tige d'actionnement ou encore il peut comprendre un système de roue et vis-sans fin réversible. D'autres mécanismes de guidage adaptés pour transmettre un mouvement de translation dans un sens puis dans un autre peuvent être envisagés.

Le palpeur 18 est relié au mécanisme de guidage 19 par un dispositif de retenue 26. En l'espèce le dispositif de retenue 26 est largable. On entend par largable que le dispositif de retenue 26 peut être dans un mode de retenue, dans lequel le palpeur 18 est mécaniquement lié au mécanisme de guidage 19 et un mode libre, dans lequel le palpeur 18 n'est plus relié mécaniquement au mécanisme de guidage 19 (le palpeur est désaccouplé du mécanisme de guidage).

Par exemple le dispositif de retenue 26 comporte un électroaimant 27. La seconde extrémité 22 du palpeur 18 est munie d'un élément en matériau magnétique, par exemple un aimant 28 ou encore comporte un matériau magnétique. En l'espèce, la seconde extrémité 22 du palpeur 18 peut comporter une collerette en un élément magnétique. Ainsi, lorsque l'électroaimant 27 est alimenté, le dispositif de retenue 26 est dans le mode dit de retenue et le mécanisme de guidage 19 est mécaniquement lié au palpeur 18 (par attraction magnétique). Le mécanisme de guidage 19 peut donc entrainer le palpeur 18 en mouvement, notamment dans un mouvement de va-et-vient de sorte que le palpeur 18, et notamment l'organe de mélange 23 du palpeur 18 effectue un mouvement de va-et-vient dans l'espace intérieur du récipient de test 2, dans le premier sens X1 et dans le deuxième sens X2 et assure ainsi le mélange du contenu du récipient de test 2. La course du palpeur 18 dans le récipient de test 2 peut par exemple être réglée selon la longueur du récipient de test 2 et la quantité de contenu présente dans le récipient de test 2.

Lorsque l'électroaimant 27 cesse d'être alimenté, l'attraction magnétique disparait et le palpeur 18 n'est plus relié ou accouplé au mécanisme de guidage 19.

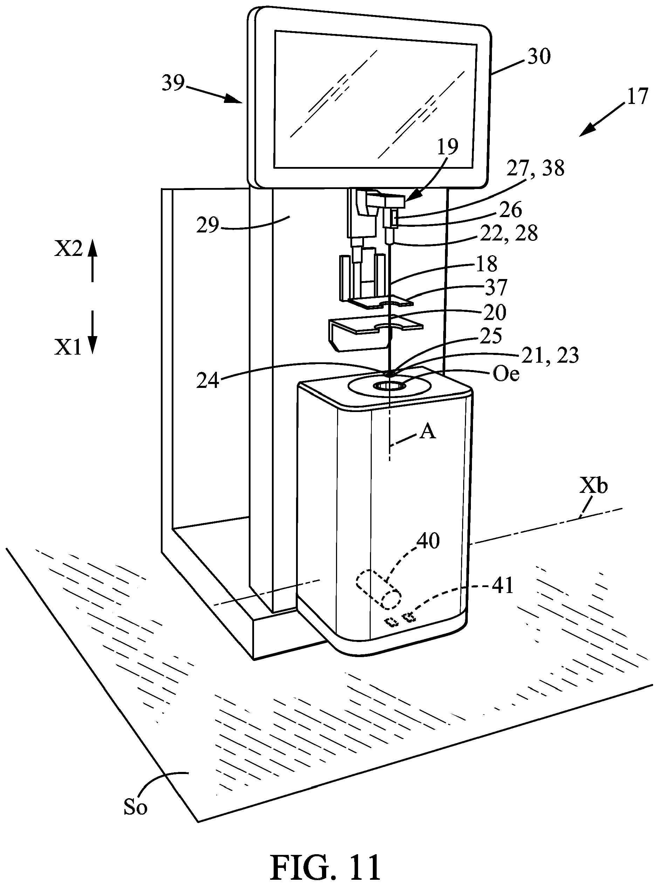

En l'espèce, comme représenté sur la figure 11, dans une configuration montée (prête à effectuer un test) le mécanisme de guidage 19 et le dispositif de retenue 26 sont disposés au-dessus de l'ouverture d'emplissage Oe du récipient de test 2. En d'autres termes, le mécanisme de guidage 19 et le dispositif de retenue 26 sont disposés en regard ou au droit de l'ouverture d'emplissage du récipient de test 2. Le palpeur 18 peut ainsi être aligné selon l'axe de récipient Xr.

Comme représenté sur la figure 11, le mécanisme de guidage 19 est fixé sur un châssis 29 du système de test 17. Le châssis 29 du système de test 17 repose sur un support So (pouvant être le sol ou le tapis d'une table par exemple). Le support So définit un plan.

Le châssis 29 peut supporter un organe d'interface 30 pour l'utilisateur du système de test 17, afin d'entrer différents paramètres pour effectuer le test, comme par exemple la fréquence et/ou le temps de secouage, et/ou afin d'afficher les résultats du test.
Sur le châssis 29 du système de test 17 est également fixé le dispositif de chauffage 1.

En l'espèce comme représenté sur les figures 6, 7 et 8, le système de test 17 peut comporter un boitier intérieur 31 et un boitier extérieur 32.

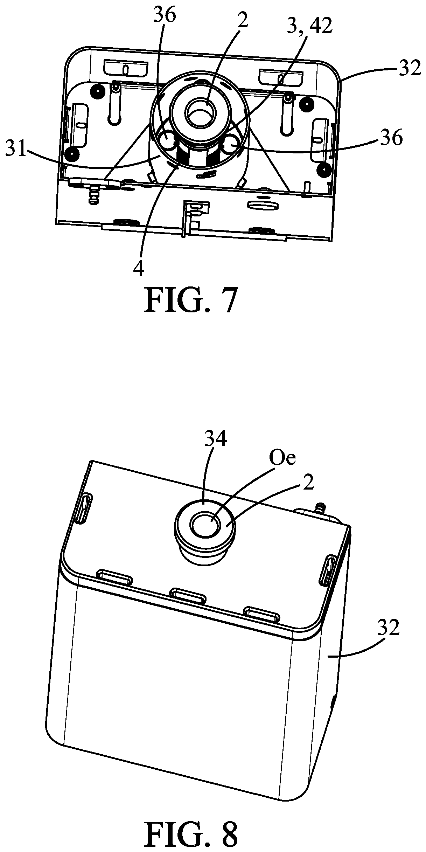

Dans le boitier intérieur 31 peut être agencé le dispositif de chauffage 1. En particulier, comme représenté sur la figure 6 plus en détail, le récipient d'accueil 3, le récipient intermédiaire 42 et la bobine 4 sont agencés dans le boitier intérieur 31. Le récipient de test 2, mobile par rapport aux récipients d'accueil 3 et intermédiaire 42 est également mobile par rapport au boitier intérieur 31. Sur la figure 7, le récipient de test 2 est en position dans le récipient intermédiaire 42. Le boitier intérieur 31 peut être de forme cylindrique ou sensiblement cylindrique et définir un corps creux dans lequel sont logés le récipient d'accueil 3 et la bobine 4.

Par exemple, le boitier intérieur 31 comporte un matériau isolant, par exemple du polychlorure de vinyle. Le boitier intérieur 31 peut être entièrement réalisé en matériau isolant, par exemple en polychlorure de vinyle. Les dimensions du boitier intérieur 31 dépendent des dimensions du récipient d'accueil 3. En particulier dans le cas d'un boitier intérieur 31 de forme cylindrique, le diamètre intérieur du boitier intérieur 31 sera supérieur au diamètre extérieur du récipient d'accueil 3. En particulier, les spires d'induction 5 de la bobine 4 seront à distance de la surface intérieure du boitier intérieur 31.

Le boitier intérieur 31 est logé dans le boitier extérieur 32. Le boitier extérieur 32 peut avoir une forme sensiblement parallélépipédique, comme représenté sur les figures 6 et 7, ou encore tout autre forme. Le boitier extérieur 32 comporte une face intérieure orientée vers le boitier intérieur 31 et une face extérieure, opposée à la face intérieure. Le boitier extérieur 32 est en particulier directement en contact avec l'utilisateur du système de test 17. En l'espèce, la face extérieure du boitier extérieur 32 est visible par un utilisateur du système de test 17.

Comme représenté sur la figure 8, le boitier extérieur 32 comporte un couvercle et englobe entièrement l'ensemble composé du récipient d'accueil 3, du récipient intermédiaire 42, de la bobine 4 et du boitier intérieur 31 de sorte qu'un utilisateur ne puisse avoir accès à ses éléments sans ouvrir le couvercle du boitier extérieur 32. Ainsi, le boitier extérieur 32 permet d'assurer la sécurité d'un utilisateur du système de test 17. Le couvercle du boitier extérieur comporte en l'espèce un orifice centré sur l'axe d'accueil Xa et qui permet l'insertion et le retrait du récipient de test 2.

La bobine 4, le récipient d'accueil 3, le récipient intermédiaire 42 et le boitier intérieur 31 sont fixes dans le boitier extérieur 32, de sorte qu'ils ne sont pas destinés à se déplacer par rapport au boitier extérieur 32. Le récipient de test 2, mobile par rapport au récipient d'accueil 3 ou récipient intermédiaire 42 est également mobile par rapport au boitier extérieur 32.

Entre le boitier extérieur 32 et le boitier intérieur 31 peut être agencé un matériau isolant 33. Ce matériau isolant 33 permet d'isoler le boitier extérieur 32 et ainsi d'éviter une éventuelle chauffe du boitier extérieur 32. Par exemple, le matériau isolant 33 peut être un isolant mince multicouches, éventuellement du type ISO7 PRO®.

Lorsque le boitier extérieur 32 est fermé (comme visible sur la figure 8), le récipient de test 2 peut être inséré ou retiré du récipient intermédiaire 42, même si ce dernier n'est pas visible depuis l'extérieur. Ainsi, il est possible de nettoyer le récipient de test 2 ou encore d'emplir le récipient de test 2 sans devoir démonter ou ouvrir le boitier extérieur 32. Il est donc notamment possible de manipuler le récipient de test 2 indépendamment du récipient d'accueil 3, du récipient intermédiaire et/ou du boitier intérieur 31 et/ou du boitier extérieur 32. En l'espèce le récipient de test 2 peut comporter à proximité de sa première extrémité une collerette de préhension 34 qui permet le retrait et l'insertion du récipient de test 2. Par exemple la collerette de préhension 34 s'étend sur tout le pourtour de l'ouverture d'emplissage Oe. La collerette de préhension peut comporter une partie coudée ou à rebord permettant à un utilisateur de soulever ou retirer le récipient de test 2. Par exemple la collerette de préhension 34 comporte un matériau thermiquement isolant. La collerette de préhension forme une poignée 34, isolante, représentée notamment sur la figure 5. La poignée peut être isolante ou réalisée en un matériau isolant. En particulier la poignée 34 permet à un manipulateur une préhension plus ergonomique et plus sûre du récipient de test avant ou après la réalisation d'un test par le système de test. En particulier, après un test, le récipient de test 2 peut avoir une température proche de 100°C et la poignée permet sa manipulation sans risque de brûlure.

Dans un état de fonctionnement du système de test 17, le récipient de test 2 est logé dans le boitier extérieur 32 et vient se centrer dans le récipient intermédiaire 42 et le récipient d'accueil 3. Le boitier extérieur 32 comprenant le récipient de test 2 et le mécanisme de guidage 19 sur lequel le palpeur 18 est monté sont disposés l'un au-dessus de l'autre selon une direction parallèle - ou sensiblement parallèle - à la direction normale au plan du support So, de sorte que le palpeur 18 soit agencé aligné avec l'ouverture d'emplissage du récipient de test 2.

Afin de faciliter l'insertion et le retrait du récipient de test 2 du boitier extérieur 32, notamment afin que le mécanisme de guidage 19 et/ou le palpeur 18 ne perturbe pas l'insertion et le retrait du récipient de test 2 du boitier extérieur 32, le boitier extérieur 32 est assemblé sur le châssis 29 mobile en pivotement autour d'un axe de basculement Xb. Ainsi, l'ensemble composé du boitier extérieur 32, du boitier intérieur 31, du récipient intermédiaire 42, du récipient d'accueil 3 et de la bobine 4 peut pivoter par rapport au châssis 29 et donc par rapport au mécanisme de guidage 19 fixé de façon non pivotante par rapport au châssis 29 pour favoriser l'insertion et le retrait du récipient de test 2 avant et après un test, comme visible sur les figures 9 et 10.

Le boitier extérieur 32 peut être verrouillé (par un système de ventouses, par exemple) sur le châssis 29 lorsque le palpeur 18 mélange le contenu ou lorsque le contenu est en train d'être chauffé. Toutefois, d'autres systèmes de verrouillage de la position du boitier extérieur peuvent être envisagés.

Dans un état prêt à fonctionner du système de test 17, l'axe d'accueil Xa et l'axe intermédiaire Xi sont alignés avec l'axe de palpeur A. Le système de ventouses verrouille la position du boitier extérieur par rapport au châssis 29, afin d'éviter tout risque de basculement.

Dans un état de montage du récipient de test 2 dans le récipient intermédiaire 42 (et a fortiori dans le récipient d'accueil 3), et donc quand le boitier extérieur 32 est en position basculée, le système de ventouses ne verrouille plus la position du boitier extérieur par rapport au châssis et les axes de palpeur A et d'accueil Xa forment un angle, par exemple un angle entre 5° et 60°, ou encore un angle entre 10° et 45°.

Le système de test 17 peut également comporter au moins un capteur de température 35. Par exemple, le capteur de température 35 est de type thermocouple ou thermistance..

Dans une variante de réalisation le système de test peut aussi comporter un ou plusieurs capteurs infrarouges 35 pour mesurer la température du récipient de test, sans contact, avec un temps de réponse particulièrement court. Le ou les capteurs infrarouges peuvent mesurer à la fois la température de la surface intérieure du récipient intermédiaire 42, et la température de la surface extérieure du récipient de test 2. Plus précisément, avant l'insertion du récipient de test dans le récipient intermédiaire, le ou les capteur(s) infrarouge peut (peuvent) mesurer la température de la surface intérieure du récipient intermédiaire. Après insertion du récipient de test dans le récipient intermédiaire 42, le ou les capteur(s) infrarouge peut (peuvent) mesurer la température de la surface extérieure du récipient de test. Ainsi, il est possible d'insérer le récipient de test une fois que l'enceinte formée par le récipient intermédiaire a atteint par exemple un préchauffage pouvant simuler un bain marie traditionnel.

Tel que représenté sur les figures, le système de test 17 comporte un ou deux capteur(s) de température 35. Toutefois, dans des variantes de réalisation, le système de test 17 peut également comporter plus d'un capteur de température 35, par exemple le système de test 17 peut comporter trois capteurs de températures, semblables ou non.

Un dispositif de ventilation 36 peut être prévu de sorte à refroidir rapidement le récipient de test 2. Ce dispositif de ventilation 36 peut comporter un ventilateur (ou turbine). De façon alternative ou complémentaire, le dispositif de ventilation 36 comporte par exemple une ou plusieurs colonnes de ventilations. Par exemple plusieurs colonnes de ventilation peuvent être réparties autour du récipient d'accueil pour refroidir le récipient de test 2 et/ou le récipient intermédiaire 42. Comme visible sur la figure 6 ou la figure 7, trois colonnes de ventilation peuvent être angulairement équi-réparties autour du récipient d'accueil. Une colonne de ventilation s'étend par exemple longitudinalement sur une longueur sensiblement égale à la longueur du récipient de test 2 et/ou du récipient intermédiaire 42. La colonne de ventilation comporte par exemple une pluralité d'orifices d'écoulement d'air répartis sur sa longueur. Des orifices peuvent être ménagés dans le récipient d'accueil de sorte à permettre l'écoulement de l'air du dispositif de ventilation vers le récipient de test 2 et/ou le récipient intermédiaire 42. Ces orifices peuvent être en regard des orifices d'écoulement d'air de la colonne de ventilation. Les orifices d'écoulement d'air peuvent avoir des diamètres égaux ou non.

De façon complémentaire ou alternative, le dispositif de ventilation peut également comprendre un ventilateur par exemple prévu dans ou à l'extérieur du boitier extérieur 32 en dessous du récipient de test 2. Le ventilateur (ou turbine) peut être associé à des éléments Peltier afin d'obtenir un refroidissement plus rapide. L'ensemble induction/dispositif de ventilation permet en outre de piloter des cinétiques de chauffe et/ou de refroidissement du récipient de test 2 avec précision (avec utilisation d'un asservissement, par exemple un module P.I.D.).

En l'espèce, comme schématisé sur la figure 11, le système de test 17 peut comporter un canal de ventilation 40 équipé d'une turbine ou d'un ventilateur associé ou non à des éléments Peltier 41. Le canal de ventilation 40 est par exemple en partie disposé en dessous du récipient de test 2 et est adapté pour permettre la création d'un canal de refroidissement autour du récipient de test. Dans une variante de réalisation, la turbine ou le ventilateur peut être agencé directement sous le récipient de test sans présence du canal de ventilation 40.

En outre le système de test 17 peut également comporter un capteur de position 37 adapté pour détecter la position du palpeur 18. Le capteur de position 37 peut par exemple détecter une position haute du palpeur 18 et une position basse du palpeur 18. Par exemple, en position haute du palpeur 18 la première extrémité 21 du palpeur 18 est soit en dehors de l'espace intérieur du récipient de test 2, soit à une distance prédéterminée du ménisque du contenu du récipient de test 2, ou encore est en affleurement avec le ménisque du contenu du récipient de test 2. En position basse, la première extrémité 21 du palpeur 18 peut être posée sur le fond du récipient de test 2.

Le capteur de position 37 peut être un capteur optique. Dans des variantes de réalisation, le capteur de position 37 du palpeur 18 peut être magnétique et/ou mécanique et non optique.

Le système de test 17 peut également comporter un capteur de force 38. En particulier le capteur de force 38 peut être positionné au niveau du support de l'électroaimant 27 ou à proximité de l'électroaimant 27. Par exemple, le capteur de force 38 forme le support de l'électroaimant 27. Le capteur de force 38 est adapté pour mesurer l'effort de poussée exercé par le palpeur 18.

En l'espèce, lors de la réalisation de certains tests, il est possible que, après avoir agité le contenu du récipient de test 2 avec le palpeur 18 guidé par le mécanisme de guidage 19, on laisse « chuter » le palpeur 18, qui n'est mécaniquement plus relié au mécanisme de guidage 19 dans le récipient de test 2. Le palpeur 18 commence alors sous l'effet de la gravité à descendre dans le récipient de test 2. Le système de test 17 tel que décrit permet notamment de mesurer le temps de descente du palpeur 18. Lors de la descente du palpeur 18, il arrive que le contenu du récipient de test 2 exerce sur le palpeur 18, plongé en tout ou parti dans le contenu, une poussée globalement verticale orientée vers le haut (en d'autres termes, orientée à l'encontre de la force de gravité exercée sur le palpeur 18). Le capteur de force 38 est destiné à mesurer la force de poussée exercée par le contenu sur le palpeur 18. Ainsi le capteur de force 38 sera agencé en regard du palpeur 18. Plus particulièrement, le capteur de force 38 est agencé en regard de la première extrémité du palpeur 18 et vient mesurer la force qui s'applique sur le palpeur 18 et qui est orientée verticalement selon la deuxième direction. Le capteur de force 38 peut par exemple être de type capacitif ou piézoélectrique ou à jauge de contrainte.

Le capteur de force 38 est par exemple réglable en hauteur par rapport à l'ouverture d'emplissage. Ainsi, lorsque la tige du palpeur 18 remonte, la première extrémité du palpeur 18 vient pousser sur le capteur de force 38 qui mesure l'effort de poussée.

De façon similaire, lorsque la tige du palpeur 18 descend dans le produit contenu dans le récipient de test 2, le capteur de force 38 peut mesurer l'effort de pénétration dans ce produit. Le capteur de force 38 peut également mesurer l'effort de rétention du palpeur par le produit.

Les données mesurées par le capteur de force 38 et/ou le capteur de température 35 peuvent être transmises à un module de traitement des données et/ou un module d'enregistrement des données 39.

En outre, la puissance de chauffage du dispositif de chauffage 1 qui détermine la température du contenu du récipient de test 2 et/ou la cadence du mécanisme de guidage 19 et/ou l'amplitude du mécanisme de guidage 19 peuvent être paramétrés selon le test à réaliser et/ou le type de contenu du récipient de test 2.

Dans une réalisation possible de l'invention, un processeur peut être prévu pour exécuter un produit programme informatique mettant en oeuvre des opérations de collecte des données fournies par le module de traitement et issues du système de test 17 ainsi que des traitements desdites données pour mesurer ou déterminer les propriétés du contenu du récipient de test 2 et/ou d'un des composants du contenu du récipient de test 2, par exemple le premier produit, notamment un matériau pulvérulent. Le processeur va pouvoir, à partir des données collectées et des paramètres d'entrée de réalisation du test sur le système de mesure déterminer les propriétés du contenu testé, et par exemple si le contenu testé est une farine, les caractéristiques biochimiques de la farine. Les paramètres d'entrée de la réalisation du test peuvent être notamment la puissance de chauffage du dispositif de chauffage 1 qui détermine la température du contenu du récipient de test 2 et/ou la cinétique de chauffe du dispositif de chauffage 1. Les paramètres d'entrée peuvent également être la cadence du mécanisme de guidage 19 et/ou l'amplitude du mécanisme de guidage 19 et/ou la force de pénétration du palpeur 18 dans le récipient de test 2 et/ou la force d'extraction du palpeur 18 dans le récipient de test 2 et/ou la force de poussée mesurée par le capteur de force 38 en fonction du temps ,

Le système de test 17 ci-avant décrit peut être mis en oeuvre selon un procédé comportant plusieurs étapes.

Dans une étape préliminaire, qui peut éventuellement être exécutée plus tard, on entre les paramètres d'entrée du test et notamment la puissance de chauffage du dispositif de chauffage 1 qui détermine la température du contenu du récipient de test 2 et/ou la cadence du mécanisme de guidage 19 et/ou l'amplitude du mécanisme de guidage 19.

Dans un premier temps, le récipient de test 2 étant hors du récipient intermédiaire 42 (et hors du récipient d'accueil 3), il est possible de remplir le récipient de test 2 avec un contenu comprenant un premier et un deuxième produit, le premier produit étant par exemple un matériau à l'état pulvérulent et le deuxième produit étant par exemple un produit liquide. Par exemple, pour réaliser le test d'Hagberg ci-dessus mentionné, on emplit le récipient de test 2 d'un contenu comprenant 25 millilitres d'eau et 7 grammes de farine. Dans une variante de réalisation, il est possible d'ajouter dans le récipient de test 2 un ou plusieurs autres produits en plus des deux mentionnés ci-dessus. On peut ensuite venir « boucher » le récipient de test 2 par le palpeur auquel un bouchon peut être relié pour fermer l'ouverture d'emplissage du récipient de test 2. Un tel bouchon peut en outre agir comme un guide pour guider la tige du palpeur 18.

Dans une deuxième étape éventuellement facultative selon l'agencement du système de test 17, on peut venir faire basculer le boitier extérieur 32 du système de test 17 par rapport au châssis 29 de sorte à libérer une ouverture d'insertion du récipient de test 2 dans le récipient intermédiaire 42 ou dans le récipient d'accueil 3 et donc dans le boitier extérieur 32.

Dans un troisième temps, on insère le récipient de test 2 comprenant le contenu et par exemple avec le palpeur et fermé par le bouchon, dans le récipient intermédiaire 42 et donc dans le récipient d'accueil 3 et par conséquent dans le boitier extérieur 32.

Dans une quatrième étape éventuellement facultative selon l'agencement du système de test 17, on vient faire basculer le boitier extérieur 32 du système de test 17 par rapport au châssis 29, notamment de sorte à placer le récipient de test 2 de façon verticale. Plus précisément, le palpeur 18 étant déjà inséré dans le récipient de test 2, on vient faire correspondre les axes de palpeur 18 et de récipient Xr de sorte que le palpeur 18 soit en regard de l'électroaimant. Suite au basculement, on vient verrouiller la position du boitier extérieur 32 par rapport au châssis 29.

Dans une cinquième étape, on met en fonctionnement le mécanisme de guidage 19 du palpeur 18 de sorte à mélanger le contenu du récipient de test 2. Après mélange, les premier et deuxième produits sont en solution ou en suspension.

Dans une sixième étape, on alimente la source de courant S de sorte à alimenter les spires d'induction 5. Cette sixième étape peut éventuellement être effectuée préalablement à l'insertion du récipient de test 2 dans le récipient intermédiaire 42. Ainsi, on peut utiliser l'échauffement de la bobine 4 pour créer un préchauffage de l'espace intérieur du récipient d'accueil et plus précisément du récipient intermédiaire. L'espace intérieur défini par le récipient intermédiaire est ainsi chauffé. On effectue ainsi le chauffage du récipient intermédiaire 42 et de son espace intérieur Eint par induction.

On effectue le chauffage du récipient de test 2 et de son contenu ainsi par induction et/ou transfert thermique. La température de chauffe du récipient de test 2 peut être contrôlée à l'aide du capteur de température 35. Par exemple, on réalise l'équivalent d'un chauffage par bain marie à 100°C du contenu du récipient dans le cas du test d'Hagberg.

Les étapes de chauffage du récipient de test 2 et de mélange du contenu du récipient de test 2 peuvent éventuellement être inversées. Notamment, une étape de préchauffage permettant le préchauffage de l'espace intérieur du récipient intermédiaire 42 peut être réalisée avant l'insertion du récipient de test 2 dans le récipient intermédiaire 42. Eventuellement le capteur de température 35 signale lorsque l'étape de préchauffage est atteinte. En outre ces étapes de chauffage du récipient de test 2 et de mélange du contenu du récipient de test 2 peuvent être répétées. L'étape de mélange peut éventuellement également être facultative.

Le chauffage du contenu du récipient de test 2 par induction et le mélange de ce contenu peuvent avoir lieu de façon simultanée.

Eventuellement une unité de commande peut permettre l'automatisation des étapes précédemment mentionnées. L'unité de commande peut par exemple être couplée à un détecteur de basculement.

Selon la méthode instaurée par le test d'Hagberg, le contenu du récipient de test 2 est chauffé à 100°C durant toute la phase de test et après le mélange de ce même contenu par le palpeur 18, on mesure un temps de chute du palpeur 18 dans le récipient de test 2. En l'espèce, on peut mesurer le temps que met le palpeur 18 pour passer d'une position haute à une position basse (dans laquelle il atteint une position prédéterminée à l'intérieur du récipient de test 2). Cette mesure du temps de chute peut être réalisée grâce au capteur de position 37 et à un chronomètre, par exemple intégré au système de test 17.

Le temps de chute peut être mesuré depuis le début de l'agitation et pendant toute la phase de descente après que le mécanisme de guidage 19 ait « largué » le palpeur 18. En d'autre terme, le temps de chute est mesuré à partir de la position haute du palpeur, soit après que le palpeur 18 soit désaccouplé du châssis 29 et du mécanisme de guidage 19 et ne soit soumis uniquement qu'à la force de gravité et freiné par la viscosité du contenu.

Lors de ce test, il est également possible de mesurer la force de poussée exercée par le contenu sur le palpeur 18 comme précédemment décrit.

Le système de test 17 décrit permet également de mettre en oeuvre d'autres tests, notamment des tests sur la propriété de farines, et par exemple réaliser une agitation continue (avec le palpeur 18 qui est déplacé par le mécanisme de guidage 19) à température constante ou variable selon une loi de cinétique de chauffe.

Le système de test 17 décrit permet en outre de régler des profils de température particuliers. En particulier, le système de test 17 permet de faire varier simplement et rapidement la température du récipient de test 2 grâce aux spires d'induction 5. La température peut également être rapidement contrôlée par le refroidisseur et/ou le ventilateur 36.

## Revendications

1. Système de test (17) adapté pour réaliser des tests portant sur un contenu comportant un dispositif de chauffage (1) d'un contenu comprenant un mélange d'un premier et un deuxième produit, ledit dispositif de chauffage comprenant :
- un récipient de test (2) adapté pour recevoir le contenu, le récipient de test (2) comporte un corps creux rigide définissant un espace intérieur (Et) et s'étendant longitudinalement selon un axe de récipient (Xr) entre une première extrémité (8) et une seconde extrémité (9), la seconde extrémité (9) étant fermée, le récipient de test (2) comprenant une surface intérieure (6) délimitant l'espace intérieur et une surface extérieure (7) opposée à la surface intérieure (6),
- un récipient d'accueil (3) adapté pour recevoir en outre le récipient de test (2), le récipient d'accueil (3) comprenant une surface intérieure (11) orientée vers la surface extérieure (7) du récipient de test (2) et une surface extérieure (12) opposée à la surface intérieure (11),
- un palpeur (18) pour effectuer le mélange du contenu du récipient de test (2), et
- un mécanisme de guidage (19) du palpeur (18) dans l'espace intérieur du récipient de test (2) selon l'axe de récipient (Xr), dans un premier sens (X1) et dans un deuxième sens (X2), opposé au premier sens (X1),
le système de test étant **caractérisé en ce qu'**il comporte:
- une bobine (4) comprenant des spires d'induction (5) qui sont fixées sur le récipient d'accueil (3) et s'étendant en spirale concentriquement autour du récipient d'accueil (3), et
- une source de courant (S) adaptée pour alimenter en courant les spires d'induction (5).

2. Système de test selon la revendication 1, dans lequel le dispositif de chauffage comprend en outre un récipient intermédiaire (42) agencé entre le récipient d'accueil (3) et le récipient de test (2), le récipient intermédiaire (42) étant adapté pour recevoir le récipient de test (2), dans lequel le récipient intermédiaire (42) est adapté pour être reçu dans le récipient d'accueil, dans lequel le récipient intermédiaire (42) comprend une surface intérieure orientée vers la surface extérieure du récipient de test (2) et une surface extérieure opposée à la surface intérieure et orientée vers la surface intérieure du récipient d'accueil (3).

3. Système selon la revendication 2, dans lequel le récipient intermédiaire (42) est réalisé dans un matériau magnétique.

4. Système selon la revendication 2 ou 3, dans lequel le récipient intermédiaire est fixé dans le récipient d'accueil (3), et dans lequel le récipient de test (2) est mobile par rapport au récipient intermédiaire.

5. Système selon l'une quelconque des revendications 2 à 4, dans lequel le récipient d'accueil (3) comporte une pluralité de bossages (15) disposés sur la face intérieure du récipient d'accueil (3), la pluralité de bossages (15) étant adaptée pour centrer et fixer le récipient intermédiaire dans le récipient d'accueil (3).

6. Système de test selon l'une quelconque des revendications précédentes, dans lequel le récipient de test (2) présente une poignée isolante, dans lequel la poignée isolante est agencée à proximité de la première extrémité (8) du récipient de test (2).

7. Système selon l'une quelconque des revendications précédentes, dans lequel le récipient d'accueil (3) comprend une rainure (16) hélicoïdale, continue, s'étendant sur la surface extérieure, et dans lequel les spires d'induction (5) de la bobine (4) sont logées dans la rainure (16).

8. Système selon l'une quelconque des revendications précédentes, dans lequel le récipient de test (2) comporte un matériau aluminium.

9. Système selon l'une quelconque des revendications précédentes, dans lequel le palpeur (18) s'étend longitudinalement selon un axe de palpeur (18) entre une première extrémité et une seconde extrémité (21, 22), la première extrémité étant adaptée pour être agencée dans l'espace intérieur du récipient de test (2), la seconde extrémité étant adaptée pour être maintenue à l'extérieur de l'espace intérieur du récipient de test (2).

10. Système selon l'une quelconque des revendications précédentes, dans lequel la première extrémité (8) du récipient de test (2) définit une ouverture d'emplissage (Oe), et dans lequel la seconde extrémité (9) comporte une ouverture de vidange (Ov) fermée par un bouchon (10).

11. Système selon la revendication 10, dans lequel le mécanisme de guidage (19) est agencé en regard de l'ouverture d'emplissage (Oe) et comporte un dispositif de retenue (26), largable, du palpeur (18), dans lequel le dispositif de retenue (26) comporte un électroaimant (27) ou une ventouse, et dans lequel le palpeur (18) comprend un élément magnétique (28).

12. Système selon l'une quelconque des revendications précédentes, comprenant en outre un capteur de force adapté pour mesurer une force de poussée, de pénétration ou de retenue du palpeur (18), et dans lequel ledit électroaimant est fixé sur le capteur de force.

13. Système selon l'une quelconque des revendications précédentes, dans lequel l'élément magnétique est fixé sur la seconde extrémité du palpeur (18).

14. Système (17) selon l'une quelconque des revendications précédentes, comprenant en outre un dispositif de ventilation adapté pour refroidir le récipient de test.

15. Système (17) selon l'une quelconque des revendications précédentes, comprenant en outre un capteur de température (35) adapté pour mesurer la température du contenu du récipient de test (2), et dans lequel le capteur de température (35) comporte au moins un capteur infrarouge.

16. Procédé de mise en oeuvre d'un système de test (17) selon l'une quelconque des revendications précédentes comprenant les étapes :
- emplir le récipient de test (2) d'un contenu comprenant un mélange d'un premier et un deuxième produit,
- placer le récipient de test (2) à l'intérieur du récipient intermédiaire,
- mélanger le contenu du récipient de test (2) avec le palpeur (18) relié au mécanisme de guidage par déplacement du palpeur (18) selon la direction de l'axe de récipient dans le premier sens et dans le deuxième sens,
- alimenter les spires d'induction (5) de sorte à créer des courants induits et de sorte à chauffer par induction le récipient intermédiaire et ainsi le contenu du récipient de test (2) et/ou l'espace intérieur défini par le récipient intermédiaire.

17. Procédé selon la revendication 16 comprenant en outre les étapes :
- larguer le palpeur (18) du dispositif de retenue de sorte que le palpeur (18) chute dans le récipient de test (2),
- mesurer le temps de chute du palpeur (18) dans le récipient de test (2).

18. Procédé selon la revendication 16 ou 17 comprenant en outre les étapes :
- prévoir un capteur de température (35),
- contrôler la température de la surface extérieure (7) du récipient de test (2).

19. Procédé selon l'une quelconque des revendications 16 à 18 comprenant les étapes :
- prévoir un capteur de force (38),
- mesurer un effort de poussée de pénétration et/ou de retenue exercé par le palpeur (18) pendant le mélange du contenu du récipient de test avec le palpeur (18) et/ou après le largage du palpeur (18) par le dispositif de retenue (26).

## Patentansprüche

1. Testsystem (17), welches dazu eingerichtet ist, Bestandteiltests auf einen Inhalt durchzuführen, umfassend eine Heizvorrichtung (1) für einen Inhalt, umfassend eine Mischung aus einem ersten und einem zweiten Produkt, wobei die Heizvorrichtung umfasst:
- einen Testbehälter (2), welcher dazu eingerichtet ist, den Inhalt aufzunehmen, wobei der Testbehälter (2) einen starren hohlen Körper umfasst, welcher einen Innenraum (Et) definiert und sich longitudinal entlang einer Behälterachse (Xr) zwischen einem ersten Ende (8) und einem zweiten Ende (9) erstreckt, wobei das zweite Ende (9) geschlossen ist, wobei der Testbehälter (2) eine Innenfläche (6) umfasst, welche den Innenraum begrenzt, sowie eine Außenfläche (7) gegenüber der Innenfläche (6),
- einen Aufnahmebehälter (3), welcher dazu eingerichtet ist, ferner den Testbehälter (2) aufzunehmen, wobei der Aufnahmebehälter (3) eine Innenfläche (11) umfasst, welche zu der Außenfläche (7) des Testbehälters (2) orientiert ist, sowie eine Außenfläche (12) gegenüber der Innenfläche (11),
- einen Rührer (18) zum Hervorrufen der Mischung des Inhalts des Testbehälters (2), und
- einen Führungsmechanismus (19) für den Rührer (18) in dem Innenraum des Testbehälters (2) entlang der Behälterachse (Xr) in einem ersten Sinn (X1) und in einem zweiten Sinn (X2) entgegen dem ersten Sinn (X1),
wobei das Testsystem **dadurch gekennzeichnet ist, dass** es umfasst:
- eine Spule (4), umfassend Induktionswindungen (5), welche an dem Aufnahmebehälter (3) befestigt sind und sich in einer Spirale konzentrisch um den Aufnahmebehälter (3) herum erstrecken, und
- eine Stromquelle (S), welche dazu eingerichtet ist, die Induktionswindungen (5) mit Strom zu versorgen.

2. Testsystem nach Anspruch 1, wobei die Heizvorrichtung ferner einen Zwischenbehälter (42) umfasst, welcher zwischen dem Aufnahmebehälter (3) und dem Testbehälter (2) angeordnet ist, wobei der Zwischenbehälter (42) dazu eingerichtet ist, den Testbehälter (2) aufzunehmen, wobei der Zwischenbehälter (42) dazu eingerichtet ist, in dem Aufnahmebehälter angeordnet zu sein, wobei der Zwischenbehälter (42) eine Innenfläche umfasst, welche zu der Außenfläche des Testbehälters (2) orientiert ist, sowie eine Außenfläche gegenüber der Innenfläche und zu der Innenfläche des Aufnahmebehälters (3) orientiert.

3. System nach Anspruch 2, wobei der Zwischenbehälter (42) aus einem magnetischen Material hergestellt ist.

4. System nach Anspruch 2 oder 3, wobei der Zwischenbehälter in dem Aufnahmebehälter (3) befestigt ist und wobei der Testbehälter (2) bezüglich des Zwischenbehälters bewegbar ist.

5. System nach einem der Ansprüche 2 bis 4, wobei der Aufnahmebehälter (3) eine Mehrzahl von Ausbuchtungen (15) umfasst, welche an der Innenfläche des Aufnahmebehälters (3) angeordnet sind, wobei die Mehrzahl von Ausbuchtungen (15) dazu eingerichtet ist, den Zwischenbehälter in dem Aufnahmebehälter (3) zu zentrieren und befestigen.

6. Testsystem nach einem der vorhergehenden Ansprüche, wobei der Testbehälter (2) einen isolierenden Griff aufweist, wobei der isolierende Griff in der Nähe des ersten Endes (8) des Testbehälters (2) angeordnet ist.

7. System nach einem der vorhergehenden Ansprüche, wobei der Aufnahmebehälter (3) eine kontinuierliche schraubenförmige Nut (16) umfasst, welche sich an der Außenfläche erstreckt und wobei die Induktionswindungen (5) der Spule (4) in der Nut (16) aufgenommen sind.

8. System nach einem der vorhergehenden Ansprüche, wobei der Testbehälter (2) ein Aluminiummaterial umfasst.

9. System nach einem der vorhergehenden Ansprüche, wobei der Rührer (18) sich longitudinal entlang einer Rührerachse (18) zwischen einem ersten Ende und einem zweiten Ende (21, 22) erstreckt, wobei das erste Ende dazu eingerichtet ist, in dem Innenraum des Testbehälters (2) angebracht zu sein, wobei das zweite Ende dazu eingerichtet ist, außerhalb des Innenraums des Testbehälters (2) gehalten zu sein.

10. System nach einem der vorhergehenden Ansprüche, wobei das erste Ende (8) des Testbehälters (2) eine Einfüllöffnung (Oe) definiert, und wobei das zweite Ende (9) eine Entleerungsöffnung (Ov) umfasst, welche durch einen Deckel (10) verschlossen ist.

11. System nach Anspruch 10, wobei der Führungsmechanismus (19) zu der Einfüllöffnung (Oe) weisend angebracht ist und eine lösbare Haltevorrichtung (26) für den Rührer (18) umfasst, wobei die Haltevorrichtung (26) einen Elektromagneten (27) oder einen Sauger umfasst, und wobei der Rührer (18) ein magnetisches Element (28) umfasst.

12. System nach einem der vorhergehenden Ansprüche, ferner umfassend einen Kraftsensor, welcher dazu eingerichtet ist, eine Schubkraft eines Einführens oder Haltens des Rührers (18) zu messen, und wobei der Elektromagnet an dem Kraftsensor befestigt ist.

13. System nach einem der vorhergehenden Ansprüche, wobei das magnetische Element an dem zweiten Ende des Rührers (18) befestigt ist.

14. System (17) nach einem der vorhergehenden Ansprüche, ferner umfassend eine Lüftungsvorrichtung, welche dazu eingerichtet ist, den Testbehälter zu kühlen.

15. System (17) nach einem der vorhergehenden Ansprüche, ferner umfassend einen Temperatursensor (35), welcher dazu eingerichtet ist, die Temperatur des Inhalts des Testbehälters (2) zu messen, und wobei der Temperatursensor (35) wenigstens einen Infrarotsensor umfasst.

16. Verfahren zum Verwenden eines Testsystems (17) nach einem der vorhergehenden Ansprüche, umfassend die Schritte:
- Befüllen des Testbehälters (2) mit einem Inhalt, welcher eine Mischung aus einem ersten und einem zweiten Produkt umfasst,
- Platzieren des Testbehälters (2) in dem Innenraum des Zwischenbehälters,
- Mischen des Inhalts des Testbehälters (2) mit dem Rührer, welcher mit dem Führungsmechanismus zum Verlagern des Rührers (18) entlang der Richtung der Behälterachse in dem ersten Sinn und dem zweiten Sinn verbunden ist,
- Versorgen der Induktionswindungen (5) derart, dass induzierte Ströme zum Heizen des Zwischenbehälters und damit des Inhalts des Testbehälters (2) und/oder des Innenraums, welcher durch den Zwischenbehälter definiert ist, durch Induktion erzeugt werden.

17. Verfahren nach Anspruch 16, ferner umfassend die Schritte:
- Trennen des Rührers (18) von der Haltevorrichtung derart, dass der Rührer (18) in den Testbehälter (2) fällt,
- Messen der Fallzeit des Rührers (18) in dem Testbehälter (2).

18. Verfahren nach Anspruch 16 oder 17, ferner umfassend die Schritte:
- Vorsehen eines Temperatursensors (35),
- Regeln der Temperatur der Außenfläche (7) des Testbehälters (2).

19. Verfahren nach einem der Ansprüche 16 bis 18, umfassend die Schritte:
- Vorsehen eines Kraftsensors (38),
- Messen einer Schubwirkung zum Einführen und/oder Halten, welche durch den Rührer (18) während des Mischens des Inhalts des Testbehälters mit dem Rührer (18) und/oder nach dem Trennen des Rührers (18) durch die Haltevorrichtung (26) ausgeübt wird.

## Claims

1. Test system (17) adapted for conducting tests on content, comprising a heating device (1) for heating content comprising a mixture of a first and a second product, said heating device comprising:
- a test container (2) suitable for receiving the content, the test container (2) comprising a rigid hollow body defining an inner space (Et) and extending longitudinally along a container axis (Xr) between a first end (8) and a second end (9), the second end (9) being closed, the test container (2) comprising an inner surface (6) defining the inner space and an outer surface (7) opposite the inner surface (6),
- a receiving container (3) suitable for also receiving the test container (2), the receiving container (3) comprising an inner surface (11) oriented towards the outer surface (7) of the test container (2) and an outer surface (12) opposite the inner surface (11),
- an arm (18) for mixing the content of the test container (2), and
- a guide mechanism (19) for guiding the arm (18) within the inner space of the test container (2) along the container axis (Xr), in a first direction (X1) and in a second direction (X2) that is opposite the first direction (X1)
the test system being **characterized in that** it comprises:
- a coil (4) comprising induction turns (5) that are fixed to the receiving container (3) and extend helically and concentrically around the receiving container (3), and
- a source of current (S) suitable for supplying current to the induction turns (5).

2. Test system according to claim 1, wherein the heating device further comprises an intermediate container (42) arranged between the receiving container (3) and the test container (2), the intermediate container (42) being suitable for receiving the test container (2), wherein the intermediate container (42) is suitable for being received in the receiving container, wherein the intermediate container (42) comprises an inner surface oriented towards the outer surface of the test container (2) and an outer surface opposite the inner surface and oriented towards the inner surface of the receiving container (3).

3. System according to claim 2, wherein the intermediate container (42) is made of a magnetic material.

4. System according to claim 2 or claim 3, wherein the intermediate container (42) is fixed in the receiving container (3), and wherein the test container (2) is movable relative to the intermediate container.

5. System according to any one of claims 2 to 4, wherein the receiving container (3) comprises a plurality of bosses (15) arranged on the inner face of the receiving container (3), the plurality of bosses (15) being adapted for centering and fixing the intermediate container in the receiving container (3).

6. Test system according to any one of the preceding claims, wherein the test container (2) has an insulating handle, wherein the insulating handle is arranged near the first end (8) of the test container (2).

7. System according to any one of the preceding claims, wherein the receiving container (3) comprises a continuous helical groove (16) extending over the outer surface, and wherein the induction turns (5) of the coil (4) are accommodated in the groove (16).

8. System according to any one of the preceding claims, wherein the test container (2) comprises an aluminum material.

9. System according to any one of the preceding claims, wherein the arm (18) extends longitudinally along an arm (18) axis between a first end and a second end (21, 22), the first end being suitable for being arranged in the inner space of the test container (2), the second end being suitable for being retained outside the inner space of the test container (2).

10. System according to any one of the preceding claims, wherein the first end (8) of the test container (2) defines a filling opening (Oe), and wherein the second end (9) has a draining opening (Ov) closed by a cap (10).

11. System according to claim 10, wherein the guide mechanism (19) is arranged facing the filling opening (Oe) and comprises a releasable retention device (26) for the arm (18), wherein the retention device (26) comprises an electromagnet (27) or a suction cup, and wherein the arm (18) comprises a magnetic element (28).

12. System according to any one of the preceding claims, further comprising a force sensor suitable for measuring a thrust, penetration, or retention force of the arm (18), and wherein said electromagnet is fixed to the force sensor.

13. System according to any one of the preceding claims, wherein the magnetic element is fixed to the second end of the arm (18).

14. System (17) according to any one of the preceding claims, further comprising a ventilation device suitable for cooling the test container.

15. System (17) according to any one of the preceding claims, further comprising a temperature sensor (35) suitable for measuring the temperature of the content of the test container (2), and wherein the temperature sensor (35) comprises at least one infrared sensor.

16. Method for implementing a test system (17) according to any one of the preceding claims, comprising the steps of:
- filling the test container (2) with content comprising a mixture of a first and a second product,
- placing the test container (2) inside the intermediate container,
- mixing the content of the test container (2) with the arm (18) connected to the guide mechanism, by moving the arm (18) along the direction of the container axis in the first direction and in the second direction,
- supplying power to the induction turns (5) so as to create induced currents and heat by induction the intermediate container and thus the content of the test container (2) and/or the inner space defined by the intermediate container.

17. Method according to claim 16, further comprising the steps of:
- releasing the arm (18) from the retention device so that the arm (18) drops into the test container (2),
- measuring the time it takes the arm (18) to drop into the test container (2).

18. Method according to claim 16 or 17, further comprising the steps of:
- providing a temperature sensor (35),
- monitoring the temperature of the outer surface (7) of the test container (2).

19. Method according to any one of claims 16 to 18, comprising the steps of:
- providing a force sensor (38),
- measuring a thrust, penetration, and/or retention force exerted by the arm (18) when mixing the content of the test container with the arm (18) and/or after release of the arm (18) by the retention device (26).
